# NEUE EUROPÄISCHE PATENTSCHRIFT

(11) **EP 2 761 198 B2**
(45) Veröffentlichungstag und Bekanntmachung des Hinweises auf die Entscheidung über den Einspruch: **17.06.2026**
(45) Hinweis auf die Patenterteilung: 27.12.2017
(21) Anmeldenummer: 12759109.7
(22) Anmeldetag: 13.09.2012
(51) Int. Cl.: F16D 65/092, F16D 65/095, F16D 55/226

(54) **SCHEIBENBREMSE**
DISC BRAKE
FREIN À DISQUE

(30) Priorität: 28.09.2011 DE 102011115213
(43) Veröffentlichungstag der Anmeldung: 06.08.2014
(73) Patentinhaber: KNORR-BREMSE Systeme für Nutzfahrzeuge GmbH, 80809 München (DE)
(72) Erfinder: SCHOENAUER, Manfred, 80995 München (DE)
(74) Vertreter: Specht, Peter
(86) Internationale Anmeldenummer: PCT/EP2012/067888
(87) Internationale Veröffentlichungsnummer: WO 2013/045275

(56) Entgegenhaltungen:
- EP-A1- 0 212 925
- EP-A1- 0 747 608
- EP-A1- 0 851 139
- WO-A1-2009/103499
- DE-A1- 102007 057 992
- DE-A1- 19 706 123
- DE-A1- 2 925 785
- JP-A- 2002 106 614
- US-A- 4 289 216
- US-A1- 2004 226 787

## Beschreibung

Die Erfindung betrifft eine Scheibenbremse gemäß dem Oberbegriff des Anspruchs 1.

Derartige Scheibenbremsen kommen vornehmlich bei Nutzfahrzeugen zum Einsatz. Zum Bremsen werden bei Betätigung einer Zuspanneinrichtung zunächst ein zuspannseitiger und in der Folge ein reaktionsseitiger Bremsbelag gegen die Bremsscheibe gepresst. Die Bremsbeläge sind üblicherweise in Belagschächten eines ortsfesten Bremsträgers positioniert, wo sie bei einer Bremsung in Umlaufrichtung der Bremsscheibe an Bremsträgerhörnern anliegen, durch die die beim Bremsen auftretenden Kräfte bzw. das auf die Bremsbeläge einwirkende Bremsmoment aufgenommen wird.

Die Zuspannung der Bremse, d.h., die beidseitige Anlage der Bremsbeläge an die Bremsscheibe, bei der die Zuspannkraft in Achsrichtung der Bremsscheibe wirksam ist, führt zu einer Belastung des Bremssattels und bei entsprechend hoher Bremskraft zu dessen Verformung derart, dass sich der Bremssattel auf seiner der Bremsscheibenachse zugewandten Seite in Achsrichtung aufweitet. Dadurch wird der gegenüberliegende, einer Montageöffnung zum Einführen der Bremsbeläge zugewandte, eine Anlagefläche an die Belagträgerplatte bildende Bereich der rückseitigen Wand des Bremssattels stärker gegen die Belagträgerplatte gepresst. D.h., die Druckverteilung der reaktionsseitigen Belagträgerplatte ist unterschiedlich.

Über die Lebensdauer des reaktionsseitigen Bremsbelages führt der ungleichmäßige Andruck zu einem hohen Verschleiß, dem sogenannten radialen Schrägverschleiß des Reibbelages in dem der Montageöffnung zugewandten Bereich.

So wird in diesem Bereich bereits eine bestimmte Verschleißgrenze erreicht, während der Reibbelag im Übrigen in seiner Dicke noch ausreichend ist. Der Bremsbelag muss daher frühzeitig ausgetauscht werden, was natürlich einer möglichen hohen Standzeit entgegensteht.

Um hier Abhilfe zu schaffen, ist in der DE 29 25 785 A1 vorgeschlagen, entsprechend dem Oberbegriff des Anspruchs 1, zwischen der rückseitigen Wandung des Bremssattels und dem reaktionsseitigen Bremsbelag in einem einer Montageöffnung des Bremssattels zugewandten Bereich in Nichtfunktionsstellung ein gegenüber dem angrenzenden Bereich breiteren Spalt auszubilden. Dieser wird dadurch hergestellt, dass die Belagträgerplatte auf ihrer der rückseitigen Wandung des Bremssattels zugewandten Rückseite zur Montageöffnung hin abgeschrägt ist.

Eine vergleichbare Scheibenbremse ist aus der DE 10 2007 057 992 A1 bekannt. Dabei weist die abgeschrägte Rückseite des Bremsbelages eine Ausnehmung auf, die der Aufnahme eines Formteilungsgrates dient.

Allerdings ergeben sich durch die schrägte Ausbildung der Rückseite erhebliche fertigungstechnische Probleme bei der Herstellung des Bremsbelages. Hierbei wird der Reibbelag üblicherweise durch Pressen bei hohen Drücken und erhöhten Temperaturen auf die Belagträgerplatte aufgebracht. Dabei liegt diese mit ihrer Rückseite auf einem planebenen Widerlager eines Presswerkzeuges auf. Eine notwendige Unterstützung zur Aufnahme des Pressdrucks in lotrechter Richtung ist durch die Schräge der Rückseite nicht sichergestellt, mit der Folge, dass der Reibbelag nicht ausreichend homogen aufgebracht wird. Dies führt zu einer Verringerung der Standzeit des Reibbelages sowie unter Umständen zu einer Einschränkung der Betriebssicherheit des Bremsbelages insgesamt.

Darüber hinaus ist durch die reduzierte Auflage der Belagträgerplatte ein hoher Verschleiß des teuren Presswerkzeuges durch auftretende Seitenkräfte zu beklagen.

Insgesamt wird damit dieser Bremsbelag den gestellten Forderungen nach einer optimierten Standzeit und einer maximal kostengünstigen Herstellung nicht gerecht.

Der Erfindung liegt die Aufgabe zugrunde, eine Scheibenbremse der gattungsgemäßen Art so weiterzuentwickeln, dass deren Standzeit optimiert und die Betriebssicherheit verbessert wird.

Diese Aufgabe wird durch eine Scheibenbremse mit den Merkmalen des Anspruchs 1 gelöst.

Durch die Erfindung wird erreicht, dass der bremsbedingte Verschleiß des reaktionsseitigen Bremsbelages gleichmäßig erfolgt, woraus sich eine höhere Standzeit ergibt.

Dabei kann die Verformung des Bremssattels im beschriebenen Sinn in Kauf genommen werden. Tatsächlich ist sogar eine leichtere Ausführung des Bremssattels möglich, da hierzu lediglich der erfindungsgemäß in ungebremster Stellung der Scheibenbremse vorgesehene größere Spalt zwischen der rückseitigen Wandung des Bremssattels und dem reaktionsseitigen Bremsbelag in einem der Montageöffnung des Bremssattels zugewandten Bereich gegenüber dem angrenzenden Bereich entsprechend anzupassen, d.h., zu verbreitern ist.

Die durch die Erfindung mögliche leichtere Bauweise des Bremssattels kommt einer stets geforderten Gewichtsoptimierung der Scheibenbremse sehr entgegen. Insbesondere führt diese dazu, dass der Kraftstoffverbrauch reduziert und damit die Betriebskosten gesenkt werden, ohne Einfluss auf die Funktionssicherheit. Daneben werden durch die Materialreduzierung bei der Konzeption des neuen Bremssattels auch die Herstellungskosten günstig beeinflusst.

Darüber hinaus bietet die Erfindung den Vorteil, dass eine als "Schirmen" bekannte, durch Bremswärme entstehende Verformung der Bremsscheibe in Achsrichtung insoweit unkritisch ist, als der Bremsbelag nun im Bereich der Montageöffnung, der größten Ausdehnung der Bremsscheibe beim "Schirmen" ausweichen kann. Damit wird die Druckverteilung zwischen dem Reibbelag und der Bremsscheibe verbessert und die bislang zu beklagende Rissempfindlichkeit der Bremsscheibe verringert.

Je nach Zuspannkraft und damit Verformungsgrad des Bremssattels kommt die rückseitige Wandung des Bremssattels zunehmend mehr zur Anlage an der Belagträgerplatte des Bremsbelages, wobei die Flächenpressung, die sich aus der aufgebrachten Kraft und der Andruckfläche zwischen der rückseitigen Wandung des Bremssattels und der Belagträgerplatte ergibt, während der gesamten Zuspannung im Wesentlichen gleich bleibt.

Der breitere Spalt wird gemäß der Erfindung durch eine Ausnehmung erreicht, deren Dimensionierung durch das Verformungsverhalten des Bremssattels bestimmt ist und die abständig zu den die Längsseiten begrenzenden Kanten der Belagträgerplatte verläuft.

Da die dem Reibbelag gegenüberliegende Rückseite mit der Ausnehmung insgesamt parallel zu der den Reibbelag tragenden Seite verläuft, ergibt sich bei der Herstellung des Bremsbelages eine vollflächige Auflage der Belagträgerplatte im Presswerkzeug, die exakt quer zur Pressrichtung positioniert ist.

Zumindest die beiden, den Längsseiten der Belagträgerplatte zugeordneten Randbereiche der Rückseite der Belagträgerplatte sind plan eben und bilden so eine satte Auflage.

Die Ausnehmung kann so ausgebildet sein, dass die angrenzenden planebenen Bereiche großflächig sind, was einen guten Wärmeübergang und eine gleichmäßige Krafteinleitung garantiert.

Dies wiederum ist Voraussetzung, um eine homogene Festigkeit des Reibbelages zu erreichen, wie sie zum einen für eine Standzeitoptimierung und zum anderen für eine hohe Betriebssicherheit erforderlich ist.

Darüber hinaus wird durch die gleichmäßige Kraftverteilung beim Pressen der Verschleiß des Presswerkzeuges reduziert, so dass die Erfindung in einem durchaus bemerkenswerten Umfang zu einer Reduzierung der Herstellungs- und Betriebskosten führt.

Üblicherweise entsprechen die Bremsbeläge in ihrer Kontur der Bremsscheibe, d.h., sie sind im Sinne eines Kreisring-Segments ausgebildet. Die Kontur der Ausnehmung entspricht der der Anlagefläche der Wand, und erstreckt sich nahezu über die gesamte Länge der Belagträgerplatte oder ist entsprechend der Auslegung und des Verformungsverhaltens des Bremssattels segmentiert. Dabei kann die Ausnehmung symmetrisch oder asymmetrisch zur Radialachse verlaufen.

Je nach Erfordernis kann die Ausnehmung in der Belagträgerplatte scharfkantig ausgebildet sein oder mit flachen Übergängen zu den angrenzenden, der Ausnehmung gegenüber erhabenen Bereichen, wobei die Winkel der Übergänge an die im Betrieb zu erwartenden Verformungen angepasst sind. Die Tiefe der Ausnehmung ist abhängig von der Fertigungsmöglichkeit, insbesondere jedoch von der Festigkeit der Belagträgerplatte und ist bevorzugt zwischen 0,5 und 2 mm.

Neben einer Herstellung der Ausnehmung durch eine spanende Bearbeitung kann die Ausnehmung auch durch eine formgebende Methode hergestellt werden, beispielsweise durch Einprägen oder dergleichen. Denkbar ist auch, die Ausnehmung durch Erodieren herzustellen oder bei Ausbildung der Belagträgerplatte als Gussteil beim Gießvorgang mit einzubringen.

Entgegen dieser einstückigen Ausbildung der Belagträgerplatte kann die Ausnehmung auch in einen in die Belagträgerplatte einfügbaren Einsatz eingebracht sein.

In jedem Fall besteht die Möglichkeit, den neuen Bremsbelag nachträglich in einen vorhandenen Bremssattel, beispielsweise im Zuge eines Austausches, einzusetzen, so dass die Vorteile der Erfindung sich auch bei bestehenden Bremsanlagen einstellen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer geschnittenen, schematischen Seitenansicht in Nichtfunktionsstellung
- Figur 2: die Scheibenbremse nach Figur 1 in Funktionsstellung
- Figuren 3 - 5: ein Ausführungsbeispiel eines Bremsbelags einer erfindungsgemäßen Scheibenbremse (Fig. 3) und zwei Ausführungsbeispiele einer nicht erfindungsgemäßen Scheibenbremse (Fig. 4 und 5 jeweils in einer Rückansicht
- Figuren 6 und 7: jeweils ein Ausführungsbeispiel einer erfindungsgemäßen Scheibenbremse mit einem Bremsbelag in einem Querschnitt, gemäß der Linie A-A
- Figur 8: ein weiteres Ausführungsbeispiel eines Bremsbelages in einer Rückansicht
- Figur 9: den Bremsbelag nach Figur 8 in einem Querschnitt.

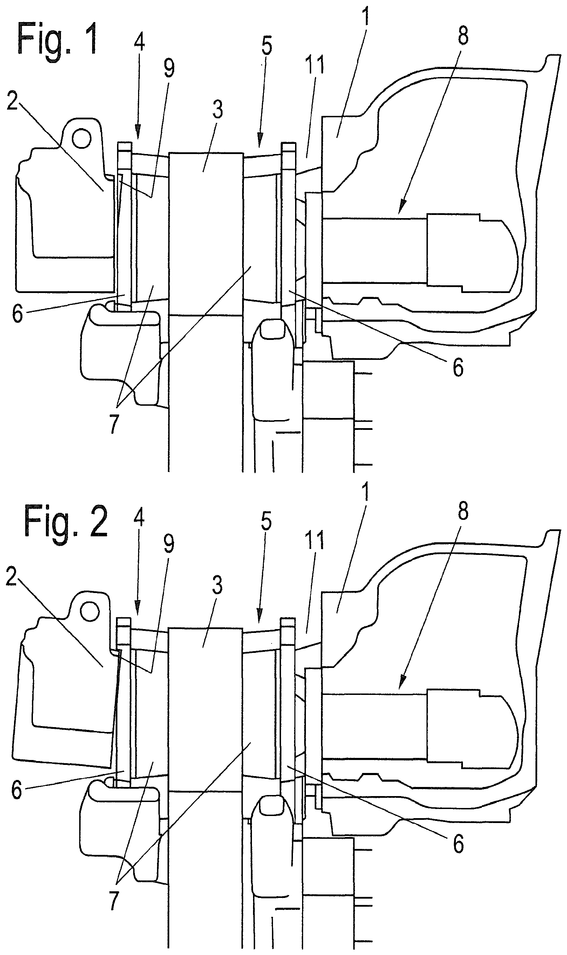

In den Figuren 1 und 2 ist schematisch ein Teil einer Scheibenbremse dargestellt, wobei die Figur 1 eine Position wiedergibt, in der die Scheibenbremse noch nicht vollständig zugespannt ist, während die Figur 2 die Stellung in einer Vollbremse wiedergibt.

Die Scheibenbremse weist einen als Schiebesattel ausgebildeten Bremssattel 1 auf, der eine Bremsscheibe 3 umfasst und in dem ein zuspannseitiger Bremsbelag 5 und ein reaktionsseitiger Bremsbelag 4 angeordnet sind, die bei einer Bremsung mittels einer Zuspanneinrichtung 8 beidseitig gegen die Bremsscheibe 3 pressbar sind.

Dabei stützt sich der reaktionsseitige Bremsbelag 4 mit einer einen Reibbelag 7 tragenden Belagträgerplatte 6 an einer rückseitigen Wandung 2 des Bremssattels 1 ab, deren Anlagefläche in den Figuren schraffiert dargestellt ist.

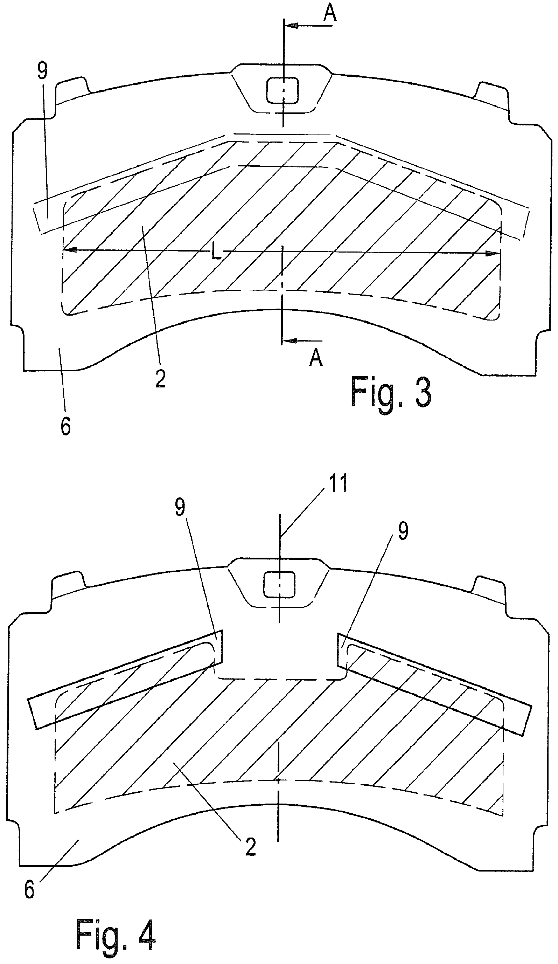

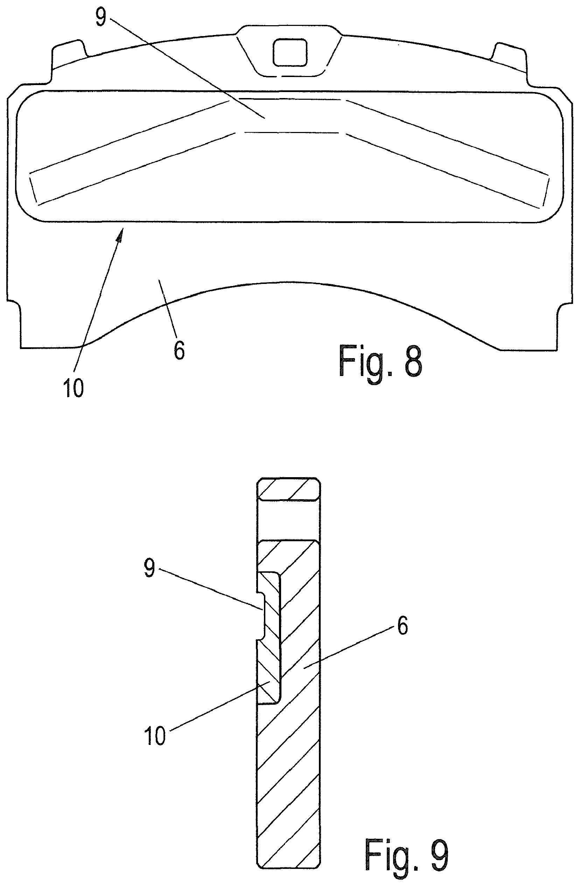

Zwischen der rückseitigen Wandung 2 des Bremssattels 1 und dem reaktionsseitigen Bremsbelag 4 ist in einem einer Montageöffnung 11, über die die Bremsbeläge 4, 5 einführbar sind, zugewandten Bereich in Nichtfunktionsstellung der Bremse, entsprechend der Figur 1, ein gegenüber dem angrenzenden Bereich breiterer Spalt gebildet, dessen Länge bei dem in den Figuren 3 und 8 gezeigten Beispiel, zumindest der Länge L der Anlage der Wandung 2 an der Belagträgerplatte 6 in Andruckstellung entspricht.

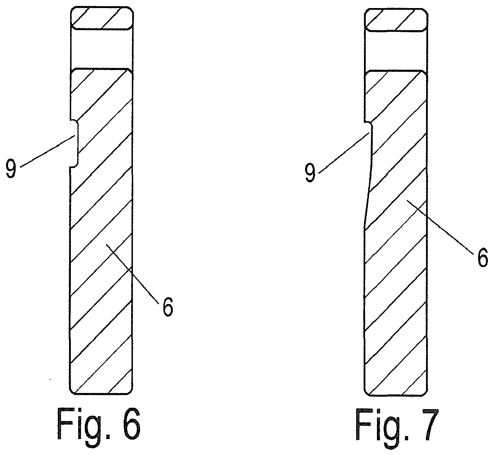

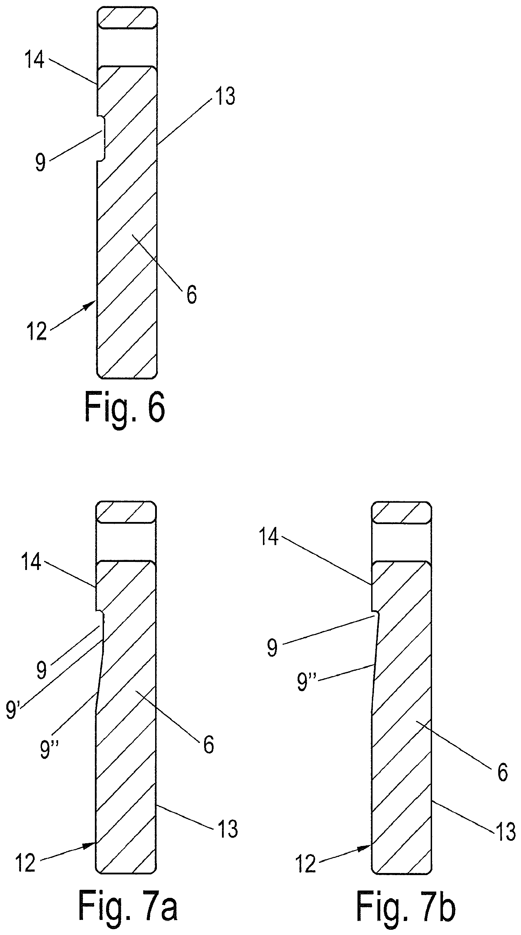

Dieser Spalt wird durch eine in der Belagträgerplatte 6 auf ihrer der Wandung 2 zugewandten Rückseite 12 vorgesehenen Ausnehmung 9 gebildet, deren Verlauf im Querschnitt, entsprechend den Ausführungsbeispielen nach den Figuren 6 und 7 unterschiedlich sein kann. Hierbei verläuft die Rückseite 12 parallel zu einer den Reibbelag tragenden Seite 13.

Während die Figur 1, wie erwähnt, die Scheibenbremse in Nichtfunktionsstellung wiedergibt, in der der Bremssattel 1 seine Ausgangsform einnimmt, zeigt die Figur 2 eine Verformung des Bremssattels 1, wie sie bei einer Vollbremsung entsteht.

Es ist deutlich zu erkennen, dass sich der Bremssattel auf der der Montageöffnung 11 abgewandten Seite aufgespreizt hat, so dass die Wandung 2 gegenüberliegend an der Ausnehmung 9, die in ihrer Kontur dem Wandungsverlauf 2 angepasst ist, einliegt.

In den Figuren 3-7 ist eine Belagträgerplatte 6 des reaktionsseitigen Bremsbelages 4 dargestellt, wobei in den Figuren 3-5 der Verlauf der Ausnehmung 9 erkennbar ist, die der individuellen Kontur der Anlagefläche im Bremssattel angepasst verläuft.

In der Figur 4 ist die Belagträgerplatte 6 mit zwei, beidseitig einer Radialachse 11 angeordneten Ausnehmungen versehen, in die die daran angepasste Wand 2 mit ihren Anlageflächenbereichen eintauchen. Dabei sind die beiden Ausnehmungen 9 spiegelsymmetrisch zur Radialachse 11 angeordnet.

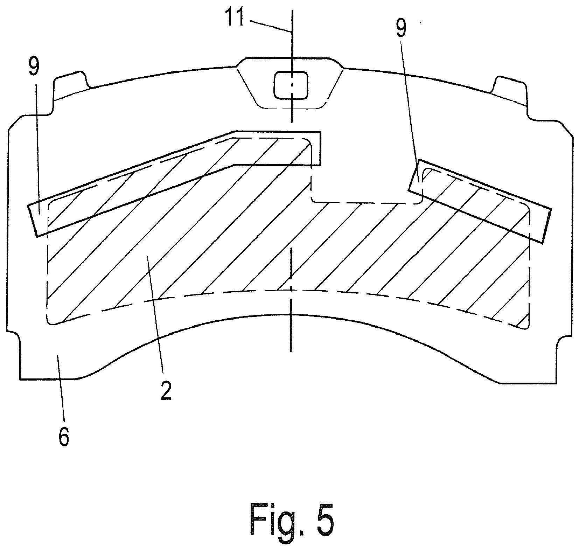

In der Figur 5 sind ebenfalls zwei Ausnehmungen 9 in der Belagträgerplatte 6 zu erkennen, die jedoch zur Radialachse 11 asymmetrisch verlaufen, deren Anordnung gleichfalls vom Verformungsverhalten der Wand 2 abhängig ist.

In der Figur 6 ist die Ausnehmung 9 im Querschnitt zu erkennen. In dieser Ausführungsvariante ist die Ausnehmung 9 scharfkantig ausgebildet, während bei dem Beispiel in Figur 7 die Ausnehmung 9 einen vom oberen, kantenseitig konvex gewölbten Randbereich 14 hin abgeflachten unteren Bereich aufweist, wobei die Ausnehmung 9 in der Figur 7a), ausgehend vom oberen Randbereich 14 zunächst als zur Rückseite 12 parallele ebene Fläche 9' in eine Schräge 9" übergeht.

In der Figur 7b) hingegen ist die Ausnehmung 9 ausschließlich als Schräge 9" in Richtung des Randbereiches 14 verlaufend ausgebildet. Im Übrigen sind der Randbereich 14 und der sich gegenüberliegende Bereich der Rückseite 12 zueinander fluchtend, d.h., in einer zur Seite 13 parallel verlaufenden, gemeinsamen Ebene angeordnet. Die Dicke der Belagträgerplatte 6 in diesem Bereich ist daher gleich.

Ebenso wie bei dem in den Figuren 3-5 gezeigten Beispielen ist auch die Ausnehmung 9 bei der in der Figur 8 gezeigten Variante in der der konvexen Außenkante zugeordneten oberen Hälfte der Belagträgerplatte 6 angeordnet.

In diesem Beispiel ist die Ausnehmung 9 in einen Einsatz 10 eingebracht, der in die Belagträgerplatte 6 eingelassen ist. Die Ausnehmung 9 im Einsatz 10 kann selbstverständlich auch in der in den Figuren 7a) und 7b) vorgeschlagenen Form vorgesehen sein.

## Patentansprüche

1. Scheibenbremse für ein Nutzfahrzeug, mit einem eine Bremsscheibe (3) umfassenden, als Schiebesattel ausgebildeten Bremssattel (1), in dem ein zuspannseitiger und ein reaktionsseitiger Bremsbelag (5, 4) angeordnet sind, die bei einer Bremsung mittels einer Zuspanneinrichtung (8) beidseitig gegen die Bremsscheibe (3) pressbar sind, wobei sich der reaktionsseitige Bremsbelag (4) mit einer einen Reibbelag (7) tragenden Belagträgerplatte (6) an einer rückseitigen Wandung (2) des Bremssattels (1) abstützt und zwischen der rückseitigen Wandung (2) des Bremssattels (1) und dem reaktionsseitigen Bremsbelag (4) in einem einer Montageöffnung (11) des Bremssattels (1) zugewandten Bereich in Nichtfunktionsstellung ein gegenüber dem angrenzenden Bereich breiterer Spalt gebildet ist, dessen Länge zumindest der Länge (L) der Anlage der Wandung (2) an der Belagträgerplatte (6) in Andruckstellung entspricht, **dadurch gekennzeichnet, dass** der Spalt durch eine einzige, in die zu der den Reibbelag (7) tragenden Seite (13) parallel und planebenen Rückseite (12) eingebrachte Ausnehmung (9) der Belagträgerplatte (6) gebildet ist, wobei die Ausnehmung (9) abständig zu den die Längsseiten begrenzenden Kanten der Belagträgerplatte (6) verläuft.

2. Scheibenbremse nach Anspruch 1, **dadurch gekennzeichnet, dass** der Querschnittsverlauf der Ausnehmung (9) an den sich durch Bremskraft beim Zuspannen der Bremse durch Verformung des Bremssattels (1) veränderten Anlagewinkel der Wandung (2) angepasst ist.

3. Scheibenbremse nach Anspruch 1 oder 2, **dadurch gekennzeichnet, dass** sich der Spalt in Richtung der Montageöffnung (11) zunehmend erweitert.

## Claims

1. Disc brake for a commercial vehicle, having a brake calliper (1) designed as a floating calliper and encompassing a brake disc (3), wherein an application-side and a reaction-side brake lining (5, 4) are arranged in the brake calliper (1), which, at the time of a braking operation, by means of a brake application means (8), can be pressed on both sides against the brake disc (3), wherein the reaction-side brake lining (4) rests, with a lining carrier plate (6) carrying a friction lining (7), against a rear-end wall (2) of the brake calliper (1), and, between the rear-end wall (2) of the brake calliper (1) and the reaction-side brake lining (4), in an area facing towards an assembly opening (11) of the brake calliper (1), in the non-operating position, a gap is formed which is wider than the adjacent area, the length thereof corresponding at least to the length (L) of the abutment of the wall (2) against the lining carrier plate (6) in the contact position, **characterised in that** the gap is formed by a single receptacle (9) of the lining carrier plate (6) incorporated into the planar rear side (12), which is parallel to the side (13) carrying the brake lining (7), wherein the receptacle (9) extends spaced apart from the edges of the lining carrier plate (6) defining the longitudinal sides.

2. Disc brake according to claim 1, **characterised in that** the cross-sectional profile of the receptacle (9) is adapted to the contact angle of the wall (2), which changes through braking force upon application of the brake through deformation of the brake calliper (1).

3. Disc brake according to claim 1 or 2, **characterised in that** the gap widens increasingly in the direction of the assembly opening (11).

## Revendications

1. Frein à disque pour un véhicule utilitaire ayant un étrier (1) de frein, qui comprend un disque (3) de frein, qui est constitué en étrier coulissant et dans lequel sont montées une garniture (5) de frein du côté du serrage et une garniture (4) de frein du côté de la réaction, qui, lors d'un freinage, peuvent être pressées au moyen d'un dispositif (8) de serrage, des deux côtés, sur le disque (3) de frein, la garniture (4) de frein du côté de la réaction étant appuyée par une plaque (6) de porte-garniture portant une garniture (7) de friction sur une paroi (2) du côté arrière de l'étrier (1) de frein, et il est formé, entre la paroi (2) du côté arrière de l'étrier (1) de frein et la garniture (4) de frein du côté de la réaction, dans une partie tournée vers une ouverture (11) de montage de l'étrier (1) de frein, en position de non fonctionnement, un intervalle large par rapport à la partie voisine, intervalle dont la longueur correspond au moins à la longueur (L) de l'application de la paroi (2) à la plaque (6) de porte-garniture en position de pression, **caractérisé en ce que** l'intervalle est formé par un seul évidement (9) de la plaque (6) de porte-garniture, ménagé dans la face (12) arrière plane et parallèle à la face (13) portant la garniture (7) de friction, l'évidement (9) s'étendant à distance des bords, délimitant les grands côtés, de la plaque (6) de porte-garniture.

2. Frein à disque suivant la revendication 1, **caractérisé en ce que** le tracé de la section transversale de l'évidement (9) est adapté à l'angle d'application de la paroi (2) modifié par déformation de l'étrier (1) de frein par la force de freinage lors du serrage du frein.

3. Frein à disque suivant la revendication 1 ou 2, **caractérisé en ce que** l'intervalle s'élargit de plus en plus dans la direction de l'ouverture (11) de montage.
